# EUROPEAN PATENT SPECIFICATION

(11) **EP 4 328 781 B1**
(45) Date of publication and mention of the grant of the patent: **25.12.2024**
(21) Application number: 22192327.9
(22) Date of filing: 26.08.2022
(51) Int. Cl.: G06F 21/64, G06Q 10/087, G06F 16/23, H04L 67/12, G05B 19/418, H04L 9/40

(54) **METHOD AND SYSTEM FOR IMPROVING QUALITY AND ACCURACY OF DATA OF PLURALITY OF DIGITAL TWINS INTERACTING IN A COMPUTER SIMULATED COLLABORATIVE ENVIRONMENT OVER A DISTRIBUTED NETWORK**
VERFAHREN UND SYSTEM ZUR VERBESSERUNG DER QUALITÄT UND GENAUIGKEIT VON DATEN MEHRERER DIGITALER ZWILLINGE IN EINER COMPUTERSIMULATIONSUMGEBUNG ÜBER EIN VERTEILTES NETZWERK
PROCÉDÉ ET SYSTÈME POUR AMÉLIORER LA QUALITÉ ET LA PRÉCISION DE DONNÉES D'UNE PLURALITÉ DE JUMEAUX NUMÉRIQUES INTERAGISSANT DANS UN ENVIRONNEMENT COLLABORATIF SIMULÉ PAR ORDINATEUR SUR UN RÉSEAU DISTRIBUÉ

(43) Date of publication of application: 28.02.2024
(73) Proprietor: Siemens Aktiengesellschaft, 80333 München (DE)
(72) Inventor: RAJ, Arun, 635110 Hosur, Tamil Nadu (IN); SINGH, Saurabh Narayan, 81739 München, Bayern (DE)
(74) Representative: Horn Kleimann Waitzhofer Schmid-Dreyer Patent- und Rechtsanwälte PartG mbB

(56) References cited:
- WO-A1-2020/051160
- DE-A1- 102020 126 566
- US-A1- 2021 192 084

## Description

The present invention generally relates to digital twin systems, and more specifically to a method and system for improving quality and accuracy of data pertaining to plurality of digital twins interacting in a computer simulated collaborative environment over a distributed network.

Industrial environments include plurality of machines or assets in an automated factory, or IoT devices interacting with one another. Industrial environments thus often include multiple interconnected components in signal communication with each other, either directly or across a network. An emerging concept complementing the rapid industrial development is "the industrial metaverse". The industrial metaverse is a next generation of fully-immersive three-dimensional collaborative space that integrates multiple technical directions such as digital twin, internet of things, industrial internet, augmented reality, virtual reality, mixed reality, and the like. Metaverse is a virtual universe with shared, 3D virtual spaces where virtual assets can be owned, placed and interacted with. It also allows different users to interact with each other in the collaborative environment. These virtual assets can be simple entities like chair or table, or complex entities like industrial machinery.

For this purpose, a typical IIoT (Industrial Internet of Things) solution in a metaverse would include building a digital twin of one or more assets in the industrial environment. In general, generating a digital twin (DT) involves collecting data from one or more data sources, modeling an asset (e.g., processing equipment) or a process to monitor or optimize the equipment or the process, and developing analytics to describe and predict equipment behavior or process behavior. A digital twin can, for example, represent a real-world power plant, a car, or an aircraft and replicates the features and parameters of the same. Conventional DTs are for only one specific piece of processing equipment. It is recognized to provide a DT for an industrial facility having interconnected processing equipment. A plurality of different DTs is thus needed from the different equipment vendors for the various processing equipment deployed on a wide variety of infrastructures. This is recognized to be difficult to manage, and to be inherently less secure than a single integrated digital twin solution for the industrial facility from a trusted vendor.

A further major challenge in such a scenario is the accuracy of the digital twin. Since the generation of digital twin involves collection of data from various data sources such as sensing units and IOT devices located on the assets and then transmission to the digital twin, the accuracy of the digital twin depends on the accuracy and correctness of the data supplied to it. In certain cases where the digital twin is being used for critical testing or trainings (e.g., for safety trainings in an offshore oil rig), the accuracy of the data is of paramount importance. However, existing methods do not provide a solution to validate accuracy of the data received from various data sources.

Another challenge arises when the data required for generating the digital twins is received from different data sources owned by a plurality of entities. For example, A digital twin of a supply chain management (SCM) system would require data from the different stakeholders (vendors, sub-vendors, OEM, etc.). In another example, a digital twin of an operational plant might be a combination of multiple digital twins like plant digital twin, equipment digital twin, etc. In another example, a digital twin of an offshore oil rig network may require data from the different oil rigs which might be operated by different vendors and connected via different networks. In all such cases, multiple challenges arise when the data is received from various data sources owned by different entities. The problem is further aggravated when the data is received from multiple sources that are not connected to each other. One of the major challenges is to verify the authenticity of the data. Furthermore, another challenge in current systems is that the accuracy of the received data cannot be analysed. Hence, the accuracy of digital twins generated from such unauthenticated and unverified data is often low.

Technological background for the disclosed solution can also be found in WO2020051160, US2021192084 and DE102020126566.

In the light of the above, there exists a need to provide a system and method for method for improving quality and accuracy of data pertaining to plurality of digital twins interacting in a computer simulated collaborative environment over a distributed network.

Therefore, the object of the invention is to provide a system and method for improving quality and accuracy of data pertaining to plurality of digital twins interacting in a computer simulated collaborative environment over a distributed network.

The invention is set out in the appended set of claims.

The object of the present invention is achieved by a computer-implemented method for improving quality and accuracy of data pertaining to plurality of digital twins interacting in a computer simulated collaborative environment over a distributed network. The method comprises receiving input data from one or more data sources corresponding to one or more entities in an industrial environment. Herein, each of the one or more entities is assigned to a first unique identifier and each of the one or more data sources is assigned to a second unique identifier.

Throughout the present disclosure, the term "industrial environment" may refer to plurality of industrial assets connected with each other to achieve a function. The industrial environment may be comprised of industrial assets such as industrial machines, industrial devices, industrial controllers, and so forth. Throughout the present disclosure, the term "one or more assets" as used herein refers to any device, system, instrument, or machinery manufactured or used in an industry that may be employed for performing an operation. Example of assets include any machinery in an industrial environment or technical installation/facility such as motors, gears, bearings, shafts, switchgears, rotors, circuit breakers, protection devices, remote terminal units, transformers, reactors, disconnectors, gear-drive, gradient coils, magnets, radio frequency coils etc. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on.

Throughout the present disclosure, the term "computed simulated environment" as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be for example a 3D model. It is also possible that physical forces and phenomena, e.g., gravity, are represented in a different way in the computer-simulated environment than in the real world, e.g., gravitational acceleration. For the purpose of this invention, the metaverse is comprised of a plurality of digital twins corresponding to real-world one or more assets in the industrial environment.

The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The computer-simulated component further comprises data that are component-specific, e.g., sensor data of a virtual sensor, that can be retrieved for example via the access interface. An access to a computer-simulated component can for example comprise usage, modification, connection to other computer-simulated components, etc. The computer-simulated component can interact with the computer-simulated environment. For the purpose of this invention, the computer-simulated component may be a digital twin or a plurality of digital twins in the computer simulated collaborative environment or metaverse.

The metaverse can be realized by a hosting environment. The hosting environment can be for example be implemented as a cloud environment, an edge-cloud environment and/or on specific devices, e.g., mobile devices.

Throughout the present disclosure, the term "one or more entities" as used herein refers to owners of the one or more data sources. The one or more entities may be individuals, businesses, organization(s), institution(s), manufacturers, service providers, data managers, and so forth.

Throughout the present disclosure, the term "one or more data sources" as used herein refers to electronic devices that provide data pertaining to one or more assets in the industrial environment. Non-limiting examples of data sources include sensors, controllers, edge devices, databases, and simulators. In an example, the one or more sources may be sensors such as a temperature sensor, a velocity sensor, an acceleration sensor, a pressure sensor, and a force sensor. The output from the sensors may be in the form of temperature data, velocity data, acceleration data or pressure data. In an embodiment, the sensor data are obtained through data acquisition interfaces. In another example, the data source may be a simulation model configured to forecast one or more parameters in the assets. In another example, the data source may be a database storing data from sensors, simulation models and manual entries by the user. In yet another example, the data source is an input device that enables user to enter requirements and data available through a web-based interface.

Throughout the present disclosure, the term "digital twin" as used herein refers to digital copy of a physical item (e.g., a real machine) that is created to support data access, command and control, remote configuration, as well as simulation and analytics. A DT is commonly created simultaneously with the real devices and systems, such as processing equipment and sensors in the facility. Once created by a specific vendor for their own specific equipment, the DT can be used to represent the machine in a digital representation of a real world system. The DT is created such that it is identical in form and behavior to the corresponding machine. DTs may be supported by the vendors' own IIoT infrastructure. Thus, each DT is associated with one and only one asset. A customer deploying IIoT may thus end up having many such DTs deployed on a wide variety of infrastructures because IIoT vendors generally host their solutions on a variety of different cloud platforms (e.g. Microsoft AZURE, Amazon CLOUD, their own or third party data center), and may use a wide variety of open source and other components to create their digital twin solutions.

Throughout the present disclosure, the term "first unique identifier" as used herein refers to a value or code that uniquely identifies an entity in the industrial environment.

Throughout the present disclosure, the term "second unique identifier" as used herein refers to a value or code that uniquely identifies a data source in the industrial environment.

According to an embodiment, the second unique identifier is linked to the first unique identifier in a hierarchical manner. Advantageously, the second unique identifier is linked to the first unique identifier in a manner such that the second unique identifier can be derived from the first unique identifier and vice-versa. This aids in establishing a relationship between the one or more data sources and the corresponding one or more entities.

According to an embodiment, the input data is cryptographically signed by the corresponding one or more data sources using the second unique identifier to verify the input data. Advantageously, the input data is encrypted by the one or more data sources using the second unique identifier such that the data is securely transmitted and provided to the corresponding digital twins.

The method comprises identifying if the one or more data sources match the requirement of the digital twins requesting the data based on the second unique identifier and a set of requirements of the digital twin. Advantageously, the requirement of the digital twin is matched with the input data to ensure that the digital twin is receiving the correct data as per the requirement.

The method comprises verifying an authenticity of the one or more data sources based on the first unique identifier and the second unique identifier using a self-sovereign identity network comprising identification information of one or more entities in the distributed network, if the one or more data sources match the requirement of the digital twins. Advantageously, the authenticity of the input data can be verified based on authentication and identification information stored in a distributed ledger. Since the verification of the data sources is based on information in the distributed ledger, the system is decentralized, secure, tamper-proof, reliable, and efficient.

The method comprises providing the received input data to the corresponding digital twin if the authenticity of the one or more entities is verified.

According to an embodiment, the method comprises discarding the input data if the authenticity of the one or more data sources based on the first unique identifier and the second unique identifier is not verified. Advantageously, the digital twins are provided with data only from verified data sources thereby assuring the accuracy of an output of the generated digital twin.

According to an embodiment, the method further comprises determining a quality of the input data received from the data sources associated with one or more entities. The method comprises calculating a quality score for the digital twin based on the determined quality of the input data. Advantageously, the quality of the generated digital twin is measured based on the quality of the input data. Furthermore, the calculation of the quality score and comparison with a predefined quality score of the corresponding digital twin ensures that the digital twins provide highly accurate output.

According to an embodiment, the method further comprises determining a rating for the one or more data sources based on the calculated quality score. The method comprises prioritizing the data sources for receiving the input data such that the quality score of the digital twin is maximal. Advantageously, the data sources are prioritized based on the quality score of the digital twin over a period of time ensuring high quality of the output of the digital twin.

The object of the invention is also achieved by an apparatus improving quality and accuracy of data of plurality of digital twins interacting in a computer simulated collaborative environment over a distributed network. The apparatus comprises one or more processing units, and a memory unit communicatively coupled to the one or more processing units. The memory unit comprises a module stored in the form of machine-readable instructions executable by the one or more processing units. The module is configured to perform method steps as described above. The execution of the module may also be performed using coprocessors such as Graphical Processing Unit (GPU), Field Programmable Gate Array (FPGA) or Neural Processing/Compute Engines.

The object of the invention is also achieved by a system for improving quality and accuracy of data of plurality of digital twins interacting in a computer simulated collaborative environment over a distributed network. The system comprises one or more data sources corresponding to one or more entities. Further, the system comprises a plurality of digital twins interacting in a computer simulated collaborative environment. Herein, each of the plurality of digital twins corresponds to one or more assets in an industrial environment. Further, the system comprises a distributed network communicatively coupled to the computer simulated collaborative environment. Herein, the distributed network comprises one or more nodes for storing identification information of one or more entities. Further, the system comprises an apparatus communicatively coupled to the distributed network and the computed simulated collaborative environment.

The object of the invention is also achieved by a computer program product comprising machine readable instructions, that when executed by one or more processing units, cause the one or more processing units to perform the aforementioned method steps.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The present invention is further described hereinafter with reference to illustrated embodiments shown in the accompanying drawings, in which:
- FIG 1: is a block diagram of a system for improving quality and accuracy of data of plurality of digital twins interacting in a computer simulated collaborative environment over a distributed network, according to an embodiment of the present invention;
- FIG 2: is a block diagram of an exemplary distributed ledger implemented for improving quality and accuracy of data of plurality of digital twins interacting in a computer simulated collaborative environment over a distributed network, according to an embodiment of the present invention;
- FIG 3: is block diagram of an exemplary apparatus for improving quality and accuracy of data of plurality of digital twins interacting in a computer simulated collaborative environment over a distributed network, according to an embodiment of the present invention; and
- FIG 4: is a flowchart depicting steps of a method for improving quality and accuracy of data of plurality of digital twins interacting in a computer simulated collaborative environment over a distributed network, according to an embodiment of the present invention.

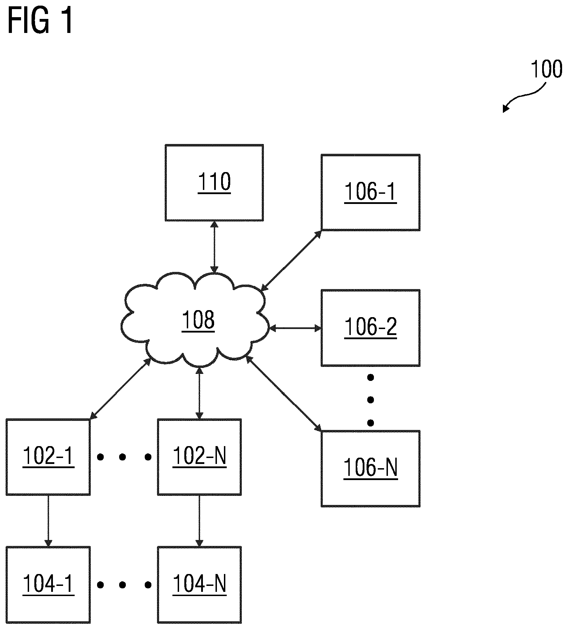

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details. FIG 1 is a block diagram of a system 100 for improving quality and accuracy of data of plurality of digital twins interacting in a computer simulated collaborative environment over a distributed network, according to an embodiment of the present invention. The system 100 comprises one or more data sources 102-1 to 102-N, one or more entities 104-1 to 104-N, plurality of digital twins 106-1 to 106-N and an apparatus 110 communicating over a communication network 108. In particular, the plurality of digital twins 106-1 to 106-N corresponding to one or more assets are collaborating with one another in the metaverse to realize an industrial digital twin.

In one or more embodiments, the one or more entities 104-1 to 104-N refer to a user or owner of the one or more data sources 102-1 to 102-N. In one example, the one or more entities 104-1 to 104-N may be a manufacturer(s) or organization(s) owning the one or more data sources 102-1 to 102-N. The one or more data sources 102-1 to 102-N provide the input data to generate the digital twins 106-1 to 106-N. In an example, the one or more data sources 102-1 to 102-N may be sensing units associated with the one or more assets. In another example, the one or more data sources 102-1 to 102-N may be databases comprising input data for generating the digital twin. The data may be real-time data as received from the one or more data sources 102-1 to 102-N.

The one or more assets may be associated with a client device (not shown). Non-limiting examples of client devices include, personal computers, workstations, personal digital assistants, human machine interfaces. The client device may enable an owner or operator of the one or more assets to view digital certificates and permissions associated therewith.

In one embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The apparatus 110 may include a module for improving quality and accuracy of data pertaining to plurality of digital twins 106-1 to 106-N interacting in a computer simulated collaborative environment over a distributed network.

Particularly, the system 100 comprises a cloud computing device configured for providing cloud services for improving quality and accuracy of data of plurality of digital twins 106-1 to 106-N interacting in a computer simulated collaborative environment over a distributed network. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

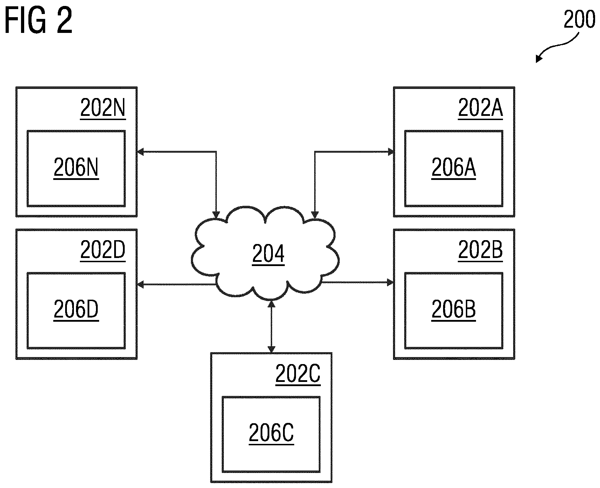

In an exemplary embodiment, the system 100 is implemented as a distributed ledger, wherein distributed ledger has nodes. Each node may belong to an entity or a data source and each of the nodes use the cloud computing hardware and OS to perform one or more actions in the distributed ledger. Each of the nodes comprise a computing device having a module and a database. One such exemplary embodiment is explained in further detail in conjunction with FIG 2.

FIG 2 is a block diagram of an exemplary distributed ledger 200 implemented using the system for improving quality and accuracy of data of plurality of digital twins 106-1 to 106-N interacting in a computer simulated collaborative environment over a distributed network, according to an embodiment of the present invention. In particular, the one or more distributed ledgers 200 (e.g., blockchain network) may be provided across one or more entities over a network 204. Exemplary entities 202A-N may include first entity 102 and second entity 104, parties to a transaction, individual computing devices associated with one or more contractors, operators, verifying authorities, shared computing resources, smart devices (e.g., smartwatches, tablets, smartphones), and so on. The entities 202A-N may store the distributed ledgers on computing systems which may be utilized in maintaining and/or updating the distributed ledgers. Each entity 202A-N may be configured for storing a version of the distributed ledger or a portion thereof.

In some examples, the distributed ledger is a blockchain based ledger wherein events and transactions are verified by the network participants in a decentralized manner and recorded on all participant nodes. Every node is identified by its address which is in turn derived from its public-private key pair. All data is recorded on the blockchain and accessible to all participants. This information is immutable and hence provides accountability and audit trails. Blockchain network (achieved via distributed consensus mechanisms) ensures that no single entity can control the network and as long as majority of the participants are honest, the network will function in a fair and unbiased manner. Blockchain also supports smart contracts which allows the business logic to be encoded in the form of a deterministic computer program. This program is executed in an isolated secure environment on all nodes and verified in a distributed manner.

In some embodiments, the entities 202A-N include at least a set of computing devices 206A-N. For example, a ledger may be stored on a large number of publicly available devices, each acting as a "node" for storing a copy of the ledger (e.g., being collaboratively maintained by anonymous peers on a network). In some embodiments, the ledger is only stored and maintained on a set of trusted "nodes", such as the computing systems of authorized users. In some embodiments, a combination and/or a "mix" of both trusted nodes and public nodes may be utilized, with the same and/or different rules being applied to activities performed at each (e.g., a different validation process may be used for untrusted nodes, or simply untrusted nodes may be unable to perform certain activities). In some embodiments, there may be different levels of nodes with differing characteristics and applied business logic.

The ledgers, ledger entries, and/or information stored on the ledger entries may be used for asset information, contract information, contractor information, operator information and so forth. Furthermore, the ledger may store digital certificates generated by the first entity and second entity, operational requirements of the assets, transactions involving different entities, automated "smart contracts" relating to control of assets and so forth. Smart contracts are computer instructions or code intended to facilitate, verify, or enforce the negotiation or performance of a contract. Further, the ledger and ledger entries may utilize encryption technology to facilitate and/or validate digital signatures, for example, facilitating multi-signature documentation, ensuring the authenticity and integrity of assets, operators, and so on.

Each of the one or more entities 202A-N may have, at various times, versions of the ledger, and the ledger may be maintained through the propagation of entries and/or updates that may be copied across ledgers. Ledger entries may contain elements of information (e.g., transaction records, document content, contract clauses, versioning information). There may be various rules and/or logic involved in activities relating to the ledger entries (e.g., creating, updating, validating), for example, a supermajority or a unanimous consent between entities may be enforced as a condition to an activity relating to an entry. In some embodiments, distributed ledgers are utilized, and the ledger entries are adapted to have various linkages to one another such that the integrity of the ledger entries can be reinforced and/or validated.

The ledger may be maintained through, for example, a "distributed network system", the distributed network system providing decentralized control and storage of the ledger at the one or more entities (which may be considered "nodes" of the system). The number of "nodes" may be fixed or vary with time and increasing or decreasing the number of "nodes" may impact the performance and/or security of the system. The ledger copies stored and maintained at each "node" provide cross-validation with one another in the event of conflicts between ledgers, and various cryptographic and/or hashing algorithms may be utilized during the generation, updating, linking, and so on, of ledger entries such that ledger entries have increased resiliency to unauthorized tampering or modification.

For example, a distributed ledger may be distributed across entities 202A-N and used to provide control access of an asset to other assets, operators, or other entities in a secure manner. The distributed ledger may have entries linked to one another using cryptographic asset information, contractor information, operator information, and entries in the blockchain may be ordered, time stamped, and/or associated with metadata such that the blockchain is designed for protection against "double" transfers and unauthorized modification of ledger entries, such as violation of policies.

In some embodiments, each block includes respective unique identifiers associated with one or more entities 202A-202N along with corresponding transaction data. The block also includes a timestamp indicating when the block was created. If there is more than one block in the blockchain, each block beyond a first block further includes a hash of a previous block in the blockchain.

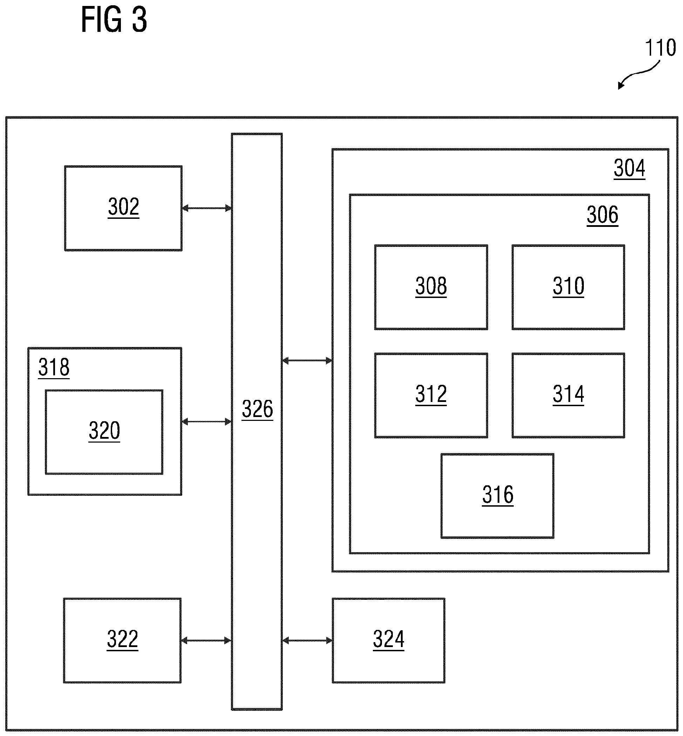

FIG 3 is block diagram of an exemplary apparatus 110 for improving quality and accuracy of data of plurality of digital twins 106-1 to 106-N interacting in a computer simulated collaborative environment over a distributed network, according to an embodiment of the present invention. The apparatus 110 may also be associated with different nodes in the distributed ledger to generate a decentralized network of one or more entities 104-1 to 104-N in the industrial environment. In an exemplary embodiment, the apparatus 110 is communicatively coupled to the one or more data sources 102-1 to 102-N and corresponding one or more entities 104-1 to 104-N. The apparatus 110 is also communicatively coupled to the plurality of digital twins 106-1 to 106-N in the computer simulated collaborative environment. In another exemplary embodiment, specific to a blockchain network, the apparatus 110 is integrated with the computing devices 206A-N of FIG 2) associated with the nodes 202A-N.

The apparatus 110 may be a personal computer, a laptop computer, a tablet, a server, a virtual machine, and the like. The apparatus 110 includes a processing unit 302, a memory 304 comprising a module 306, a storage unit 318 comprising a database 320, an input unit 322, an output unit 324 and a bus 326.

The processing unit 302 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 302 may also include embedded controllers, such as generic or programmable logic devices or arrays, application specific integrated circuits, single-chip computers, and the like.

The memory 304 may be non-transitory volatile memory and/or non-volatile memory. The memory 304 may be coupled for communication with the processing unit 302, such as being a computer-readable storage medium. The processing unit 302 may execute instructions and/or code stored in the memory 304. A variety of computer-readable instructions may be stored in and accessed from the memory 304. The memory 304 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 304 includes the 306 stored in the form of machine-readable instructions on any of the above-mentioned storage media and may be in communication to and executed by the processing unit 302. When the machine-readable instructions are executed by the processing unit 302, the module 306 causes the processing unit 302 to verify the authenticity and accuracy of the input data as received from the one or more data sources 102-1 to 102-N.

The module 306 further comprises data acquisition module 308, requirement matching module 310, verification module 312, quality score calculation module 314, and prioritization module 316.

The data acquisition module 308 is configured for input data from one or more data sources 102-1 to 102-N corresponding to one or more entities 104-1 to 104-N in an industrial environment. The data acquisition module 308 receives and processes the data to be provided to the plurality of digital twins 106-1 to 106-N. Furthermore, the data acquisition module 308 is also configured for receiving a set of requirements for the digital twin. The set of requirements indicate which type of data is required for the corresponding digital twin.

The requirement matching module 310 is configured for identifying if the one or more data sources 102-1 to 102-N match the requirement of the digital twins 106-1 to 106-N requesting the data based on the second unique identifier and the set of requirements of the digital twin. The requirement matching module 310 is configured to extract information from the set of requirements to correctly identify the one or more data sources 102-1 to 102-N for providing the input data to the corresponding digital twins 106-1 to 106-N.

The verification module 312 is configured for verifying the authenticity of the one or more data sources 102-1 to 102-N based on the first unique identifier and the second unique identifier using a self-sovereign identity network comprising identification information of one or more entities 104-1 to 104-N in the distributed network. Furthermore, the verification module 312 is configured to verify the one or more data sources 102-1 to 102-N only if the one or more data sources 102-1 to 102-N match the requirement of the digital twins 106-1 to 106-N.

The quality score calculation module 314 is configured for determining a quality of the input data received from the data sources 102-1 to 102-N associated with one or more entities 104-1 to 104-N. Further, the quality score calculation module 314 is configured to generate the quality score of the digital twin based on the determined quality of the input data.

The prioritization module 316, is configured for determining a rating for the one or more data sources 102-1 to 102-N based on the calculated quality score. Further, the prioritization module 316 is configured to prioritizing the data sources 102-1 to 102-N for receiving the input data such that the quality score of the digital twin is maximal.

The processing unit 302 is configured for performing all the functionality of the module 306. The processing unit 302 is configured for receiving input data from one or more data sources 102-1 to 102-N corresponding to one or more entities 104-1 to 104-N in an industrial environment. Each of the one or more entities 104-1 to 104-N is assigned to a first unique identifier and each of the one or more data sources 102-1 to 102-N is assigned to a second unique identifier. Further the processing unit 302 is configured for identifying if the one or more data sources 102-1 to 102-N match the requirement of the digital twins 106-1 to 106-N requesting the data based on the second unique identifier and a set of requirements of the digital twin. Further, the processing unit 302 is configured for verifying an authenticity of the one or more data sources 102-1 to 102-N based on the first unique identifier and the second unique identifier using a self-sovereign identity network comprising identification information of one or more entities 104-1 to 104-N in the distributed network, if the one or more data sources 102-1 to 102-N match the requirement of the digital twins 106-1 to 106-N. Further, the processing unit 302 is configured for providing the received input data to the corresponding digital twin, if the authenticity of the one or more entities 104-1 to 104-N is verified.

The storage unit 318 comprises the database 320 for storing digital certificates, authorization request, data pertaining to operators and so forth. The storage unit 318 and/or database 320 may be provided using various types of storage technologies, such as solid state drives, hard disk drives, flash memory, and may be stored in various formats, such as relational databases, non-relational databases, flat files, spreadsheets, and extended markup files, etc.

The input unit 322 may provide ports to receive input from input devices such as keypad, touch-sensitive display, camera (such as a camera receiving gesture-based inputs), etc. capable of receiving set of requirements for the digital twin in industrial environment. The display unit 324 may provide ports to output data via output device with a graphical user interface for displaying the plurality of digital twins in the computer simulated virtual environment. The bus 326 acts as interconnect between the processing unit 302, the memory 304, the storage unit 318, the input unit 322, and the display unit 324.

Those of ordinary skilled in the art will appreciate that the hardware depicted in FIG 3 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

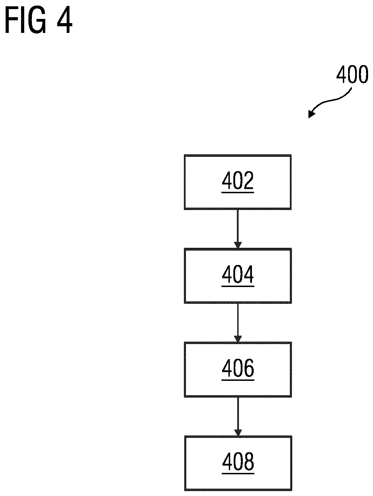

FIG 4 is a flowchart depicting steps of a method 400 for improving quality and accuracy of data pertaining to plurality of digital twins 106-1 to 106-N interacting in a computer simulated collaborative environment over a distributed network, according to an embodiment of the present invention. The digital twins 106-1 to 106-N may correspond to real-world objects in the industrial environment such as the one or more assets including but not limited to motors, gears, bearings, shafts, switchgears, rotors, circuit breakers, protection devices, remote terminal units, transformers, reactors, disconnectors, gear-drive, gradient coils, magnet, radio frequency coils etc. Exemplary technical systems include turbines, large drives, Magnetic Resonance Imaging (MRI) scanner, etc. The plurality of digital twins 106-1 to 106-N receive data from one or more data sources 102-1 to 102-N. Non-limiting examples of data sources 102-1 to 102-N include sensors, controllers, edge devices, databases, and simulators. In an example, the one or more data sources 102-1 to 102-N may be sensors such as a temperature sensor, a velocity sensor, an acceleration sensor, a pressure sensor, and a force sensor. The output from the sensors may be in the form of temperature data, velocity data, acceleration data or pressure data. In an embodiment, the sensor data is obtained through data acquisition interfaces. In another example, the data source 102-1 to 102-N maybe a simulation model configured to forecast one or more parameters in the assets. In another example, the data source 102-1 to 102-N maybe a database storing data from sensors, simulation models and manual entries by the user. In yet another example, the data source 102-1 to 102-N is an input device that enables user to enter requirements and data available through a web-based interface.

The plurality of digital twins 106-1 to 106-N are generated from the input data received from the one or more data sources 102-1 to 102-N. The digital twin is commonly generated simultaneously with the real devices and systems, such as processing equipment and sensors in the facility. Once created by a specific vendor for their own specific equipment, the digital twin can be used to represent the assets in a digital representation of a real world system. The digital twin is created such that it is identical in form and behavior to the corresponding machine. The digital twin thus generated may be a dynamic virtual replica based on one or more of physics-based models, Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on.

The plurality of digital twins 106-1 to 106-N may correspond to one or more assets in the industrial environment. The plurality of digital twins 106-1 to 106-N are interacting with one another in a collaborative manner in the metaverse in order to realize a higher level digital twin. In an example, a first layer of one or more digital twins 106-1 to 106-N corresponding to one or more components of an asset are interacting with one another to generate an equipment level digital twin. In a further example, one or more equipment level digital twins 106-1 to 106-N are interacting with one another in collaborative manner to generate a plant level digital twin. In a further example, one or more plant level digital twins 106-1 to 106-N are interacting with another to form an industrial environment level digital twin.

The plurality of digital twins 106-1 to 106-N can be visualized in the computer simulated virtual environment for example, in the metaverse. It can be understood as a virtual world of the industrial environment wherein the plurality of digital twins 106-1 to 106-N are interacting with one another. Such digital twins 106-1 to 106-N are in particular accessible by the user, i.e. digital twins 106-1 to 106-N accessible from the real/physical world. For example, it is possible that the user can access the plurality of digital twins 106-1 to 106-N in the metaverse via an interface, e.g., a virtual reality (VR) or augmented reality (AR) interface. The counterpart of the computer-simulated environment does not necessarily have to exist but can be for example a three-dimensional model of an asset in the industrial environment.

In this invention, the metaverse comprises a plurality of digital twins 106-1 to 106-N. The digital twins 106-1 to 106-N can for example be understood as a representation, in particular a 3D representation, of a real or physical component such as one or more assets. Each component of the digital twin can have different functionalities/features, e.g., an access interface. The digital twins 106-1 to 106-N further comprise data that are asset specific, e.g., sensor data of a virtual accelerometer that can be retrieved for example via the access interface. An access to the digital twins 106-1 to 106-N can for example comprise usage, modification, connection to other digital twins 106-1 to 106-N, etc. The digital twins 106-1 to 106-N can interact with the metaverse and other components in the metaverse.

At step 402, input data is received from one or more data sources 102-1 to 102-N corresponding to one or more entities 104-1 to 104-N in an industrial environment. The input data is the sensor data received from the one or more data sources 102-1 to 102-N sensors, controllers, edge devices, databases, and simulators. The input data as received from various data sources 102-1 to 102-N are provided for generation of plurality of digital twins 106-1 to 106-N. Herein, the one or more data sources 102-1 to 102-N are owned by the one or more entities 104-1 to 104-N. In an example, the entity is an individual data provider for a particular parameter of the digital twin, such as temperature of a motor. In another example, the entity is an organization or an institution owning an industry that provide data of various assets in the industry. In another example, the entity is a manufacturer of the data sources 102-1 to 102-N such as sensors installed in the industry and have a right to own and provide data to third parties. In yet another example, the entity is a service provider authorized to collect and provide data to third parties for further processing and use.

Herein, each of the one or more entities 104-1 to 104-N is assigned to a first unique identifier. The first unique identifier is a value or code that uniquely identifies an entity in the industrial environment. Notably, each of the one or more entities 104-1 to 104-N are assigned to corresponding first unique identifiers in the distributed network. In an example, when a particular entity joins the distributed network, for example, the blockchain may assign the first unique identifiers to the particular entity. Further, each of the one or more data sources 102-1 to 102-N is assigned to a second unique identifier. The second unique identifier is a value or code that uniquely identifies a data source in the industrial environment. Notably, each of the one or more data sources 102-1 to 102-N are assigned to corresponding second unique identifiers in the distributed network. In an example, when a particular data source joins the distributed network, for example, the blockchain may assign corresponding the second unique identifiers to that particular data source. In an example, the first unique identifier and the second unique identifier are assigned by a self-sovereign identity (SSI) network.

In an embodiment, the input data is cryptographically signed by the corresponding one or more data sources 102-1 to 102-N using the second unique identifier to verify the input data. In an example, the input data originating from the one or more data sources 102-1 to 102-N is digitally signed by the second unique identifier, thereby providing data authenticity.

In an embodiment, the second unique identifier is linked to the first unique identifier in a hierarchical manner. In an example, both the first unique identifier and the second unique identifier are both linked to each other in a manner that the origin of the input data can be traced back to the one or more entities 104-1 to 104-N providing the data. In an example, a component designer for a particular digital twin might have a single design which can be easily signed and shared. However, the plant operator who owns/manages the operational data, needs to fetch, and supply the input data from multiple data sources 102-1 to 102-N like IoT devices and sensors. In such a scenario, every data source is assigned the second unique identifier which is derived from the first unique identifier of the entity in a hierarchical manner. Advantageously, this makes sure that only the relevant unique identifiers are disclosed by the corresponding entities 104-1 to 104-N on a need basis. Another advantage of this approach is that the second unique identifiers when derived from the first unique identifiers can be immediately verified to its origin without having to store additional cryptographic keys in the network.

At step 404, it is identified if the one or more data sources 102-1 to 102-N match the requirement of the digital twins 106-1 to 106-N requesting the input data based on the second unique identifier and a set of requirements of the digital twin. Notably, since the second unique identifier is linked to the first unique identifier in a hierarchal manner, the origin of the data source and the corresponding owners such as entities 104-1 to 104-N can be verified. Furthermore, it is also identified if the input data that is received from the one or more data sources 102-1 to 102-N matches the requirement of the digital twins 106-1 to 106-N. In an example, the set of requirements of a particular digital twin for a CNC machine may be thermal data, accelerometer data, proximity data, flux data, load data, and current data relating to behaviors of various components of the CNC machine. Such requirements of the CNC machine may be compared with the received input in order to verify if correct input data is received from the one or more data sources 102-1 to 102-N.

At step 406, an authenticity of the one or more data sources 102-1 to 102-N is verified based on the first unique identifier and the second unique identifier using a self-sovereign identity network comprising identification information of one or more entities 104-1 to 104-N in the distributed network if the one or more data sources 102-1 to 102-N match the requirement of the digital twins 106-1 to 106-N.

It should be understood that the self-sovereign identity (SSI) network is known in the art. Decentralized identity or DID is an identity system developed by the Worldwide Consortium (W3C). DIDs are a type of identifier that provides a digital identity that is verifiable, decentralized, and "self-sovereign." Self-sovereign identity generally encompasses the concept that different entities 104-1 to 104-N such as individuals and businesses can store their own identity data on their own devices and provide the identity data to other devices/systems to validate the identity data, without relying on a central repository of identity data. Thus, the self-sovereign identity network ensures identifiers used are unique, identity ownership is retained by the requesting entity and identity disputes are able to be resolved without the use of a central authority.

In one embodiment, a Self-Sovereign Identity (SSI) network model is provided. In an example, SSI W3C standards-based solution of delf-sovereign identity management is provided. The SSI key concepts are as follows:
DID-decentralized identifier, a globally unique identifier-i.e., URN based-resolvable and verifiable;
DID infrastructure model-i.e., global key-value pair database composed of all DID blockchains, networks, etc.;
The value of the DID is a document;
Verifiable Credential (VC) that extends the DID by a tamper-evident and verifiable set of claims made by an issuer;
Verifiable Presentation (VP) derived from VC(s) to present specific credential(s) attributes shared with a specific verifier. The VP may contain data generated from the original credential (i.e., zero knowledge proofs); and
Verifiable Data Registry-mediates the creation and verification of identities, credential schemas, etc.

As a general description, DIDs (for example the first unique identifier and the second unique identifier) are Uniform Resource Locators (URLs) that relate a DID subject to a DID document allowing trustable interactions with that subject. DID documents are documents describing how to use that specific DID. Each DID document can express cryptographic material, verification methods, or service endpoints.

In an embodiment, the self-sovereign identity (for example, the first unique identifier and the second unique identifier) is assigned (or self-assigned) to the one or more entities 104-1 to 104-N (individuals/organizations) who own the plurality of digital twins 106-1 to 106-N and corresponding one or more data sources 102-1 to 102-N. In an exemplary embodiment for a CNC machine digital twin having plurality of digital twins 106-1 to 106-N interacting with one another in the metaverse, following is the list of entities involved in the CNC machine digital twin:
1. Component designer (for each component of the CNC machine)
2. Component manufacturer (for each component of the CNC machine)
3. Original Equipment Manufacturer (OEM) designer
4. Original Equipment Manufacturer (OEM) assembler
5. Original Equipment Manufacturer (OEM) tester
6. Plant operator

Each of the above listed entities 104-1 to 104-N are assigned a first unique identifier (i.e. a digital identity).

Furthermore, the authenticity of the one or more data sources 102-1 to 102-N is verified based on the first unique identifier and the second unique identifier using the self-sovereign identity network comprising identification information of each of the entities 104-1 to 104-N and the data sources 102-1 to 102-N.

At step 408, the received input data is provided to the corresponding digital twin if the authenticity of the one or more entities 104-1 to 104-N is verified. In an embodiment, the input data is discarded if the authenticity of the one or more data sources 102-1 to 102-N based on the first unique identifier and the second unique identifier is not verified. Advantageously, no unverified input data that is received from the one or more data sources 102-1 to 102-N is provided to the digital twins 106-1 to 106-N. In an embodiment, the quality of the input data is determined that is received from the one or more data sources 102-1 to 102-N associated with one or more entities 104-1 to 104-N. Furthermore, a quality score for the digital twin is calculated based on the determined quality of the input data. The quality score of the digital twin is calculated based on the quality of data such as accuracy of data, completeness of data, consistency of data, reliability of data and so forth. It should be understood that a high quality score of the digital twins 106-1 to 106-N ensure that the accuracy of the digital is also high.

In an embodiment, a rating for the one or more data sources 102-1 to 102-N is determined based on the calculated quality score. It should be understood that the data sources 102-1 to 102-N which result in higher quality score for the digital twin are given a higher rating. Subsequently, the one or more data sources 102-1 to 102-N are assigned lower ratings as the quality score decreases. In an example, the user can provide a rating to the data sources 102-1 to 102-N manually. Furthermore, the data sources 102-1 to 102-N are prioritized for receiving the input data such that the quality score of the digital twin is maximal. Advantageously, the data sources 102-1 to 102-N from where the input data should be received are prioritized based on the rating of the one or more data sources 102-1 to 102-N such that the accuracy of the generated digital twin is higher.

Advantageously, the present invention provides a decentralized, secure, and efficient system for improving quality and accuracy of data pertaining to plurality of digital twins 106-1 to 106-N interacting in a computer simulated collaborative environment over a distributed network. Beneficially, the abovementioned method and system ensures the generation of valid digital twins 106-1 to 106-N by ascertaining the authenticity and quality of the various data sources 102-1 to 102-N and their corresponding one or more entities 104-1 to 104-N. The present invention is beneficial in combining the plurality of digital twins 106-1 to 106-N for complex use cases in a decentralized manner, while ensuring data quality. The present invention also helps in increasing customer value when a combined digital twin is used in a metaverse application to provide value-added services to a third-party. Beneficially, such a system ensures that only high quality input data from authenticated sources is considered for generation of digital twin, thereby providing high accuracy outputs.

Those skilled in the art will recognize that, unless specifically indicated or required by the sequence of operations, certain steps in the processes described above may be omitted, performed concurrently or sequentially, or performed in a different order.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### List of references

- 100: system
- 102-1 to 102-N: data source
- 104-1 to 104-N: entity
- 106-1 to 106-N: digital twin
- 108: blockchain network
- 110: apparatus
- 200: distributed ledger
- 202A-N: one or more entities
- 204: network
- 206A-N: one or more computing devices
- 302: one or more processing units
- 304: memory unit
- 306: module
- 308: data acquisition module
- 310: requirement matching module
- 312: verification module
- 314: quality score calculation module
- 316: prioritization module
- 318: storage unit
- 320: database
- 322: input unit
- 324: output unit
- 326: bus
- 400: flowchart of a method for improving quality and accuracy of data pertaining to plurality of digital twins interacting in a computer simulated collaborative environment over a distributed network

## Claims

1. A computer implemented method (400) for improving quality and accuracy of data for plurality of digital twins (106-1 to 106-N) interacting in a computer simulated collaborative environment over a distributed network, the method comprising:
receiving, by a processing unit (302), input data from one or more data sources (102-1 to 102-N) corresponding to one or more entities (104-1 to 104-N), wherein each of the one or more entities (104-1 to 104-N) is assigned to a first unique identifier and each of the one or more data sources (102-1 to 102-N) is assigned to a second unique identifier;
identifying, by the processing unit (302), if the one or more data sources (102-1 to 102-N) match the requirement of the digital twins (106-1 to 106-N) requesting the input data based on the second unique identifier and a set of requirements of the digital twin;
verifying, by the processing unit (302), an authenticity of the one or more data sources (102-1 to 102-N) based on the first unique identifier and the second unique identifier using a self-sovereign identity network comprising identification information of one or more entities (104-1 to 104-N) in the distributed network, if the one or more data sources (102-1 to 102-N) match the requirement of the digital twins (106-1 to 106-N);
providing, by the processing unit (302), the received input data to the corresponding digital twin if the authenticity of the one or more entities (104-1 to 104-N) is verified.

2. The method (400) according to claim 1, wherein the input data is cryptographically signed by the corresponding one or more data sources (102-1 to 102-N) using the second unique identifier to verify the input data.

3. The method (400) according to claim 1, wherein the second unique identifier is derived from the first unique identifier in a hierarchical manner.

4. The method (400) according to claim 1, further comprising discarding the input data if the authenticity of the one or more data sources (102-1 to 102-N) based on the first unique identifier and the second unique identifier is not verified.

5. The method (400) according to any of the preceding claims further comprising:
determining, by the processing unit (302), a quality of the input data received from the data sources (102-1 to 102-N) associated with one or more entities (104-1 to 104-N);
calculating, by the processing unit (302), a quality score for the digital twin based on the determined quality of the input data.

6. The method (400) according to any of the preceding claims further comprising:
determining, by the processing unit (302), a rating for the one or more data sources (102-1 to 102-N) based on the calculated quality score;
prioritizing, by the processing unit (302), the data sources (102-1 to 102-N) for receiving the input data such that the quality score of the digital twin is maximal.

7. An apparatus (110) for improving quality and accuracy of data of plurality of digital twins (106-1 to 106-N) interacting in a computer simulated collaborative environment over a distributed network, the apparatus comprising:
one or more processing units (302); and
a memory (304) communicatively coupled to the one or more processing units (302), the memory (304) comprising a module (306) stored in the form of machine-readable instructions executable by the one or more processing units (302), wherein the module is configured to perform the method (400) steps according to claims 1 to 6.

8. A system (100) for improving quality and accuracy of data of plurality of digital twins (106-1 to 106-N) interacting in a computer simulated collaborative environment over a distributed network, the system comprising:
one or more data sources (102-1 to 102-N) corresponding to one or more entities (104-1 to 104-N);
a plurality of digital twins (106-1 to 106-N) interacting in a computer simulated collaborative environment, wherein each of the plurality of digital twins (106-1 to 106-N) corresponds to one or more assets in an industrial environment;
a distributed network (108) communicatively coupled to the computer simulated collaborative environment, wherein the distributed network comprises one or more nodes (202A-202N) for storing identification information of one or more entities (104-1 to 104-N); and
an apparatus (110) according to claim 7, communicatively coupled to the distributed network (108) and the computer simulated collaborative environment, wherein the wherein the apparatus (110) is configured for improving quality and accuracy of data of plurality of digital twins (106-1 to 106-N), according to any of the method claims 1 to 6.

9. A computer-program product, having computer-readable instructions stored therein, that when executed by a processing unit (302), cause the processing unit (302) to perform method (400) steps according to any of the claims 1 to 6.

10. A computer readable medium on which program code sections of a computer program are saved, the program code sections being loadable into and/or executable in a system to make the system (100) execute the method (400) steps according to any of the claims 1 to 6 when the program code sections are executed in the system (100).

## Patentansprüche

1. Computerimplementiertes Verfahren (400) zur Verbesserung der Qualität und Genauigkeit der Daten für eine Vielzahl digitaler Zwillinge (106-1 bis 106-N), die in einer computersimulierten kollaborativen Umgebung über ein verteiltes Netzwerk interagieren, wobei das Verfahren umfasst:
Empfangen, durch eine Verarbeitungseinheit (302), von Eingabedaten aus einer oder mehreren Datenquellen (102-1 bis 102-N), die einer oder mehreren Entitäten (104-1 bis 104-N) entsprechen, wobei jede der einen oder der mehreren Entitäten (104-1 bis 104-N) einer ersten eindeutigen Kennung zugewiesen ist und jede der einen oder der mehreren Datenquellen (102-1 bis 102-N) einer zweiten eindeutigen Kennung zugewiesen ist;
Identifizieren, durch die Verarbeitungseinheit (302), ob die eine oder die mehreren Datenquellen (102-1 bis 102-N) der Anforderung der digitalen Zwillinge (106-1 bis 106-N), die die Eingabedaten anfordern, entsprechen, basierend auf der zweiten eindeutigen Kennung und einem Satz von Anforderungen des digitalen Zwillings;
Verifizieren, durch die Verarbeitungseinheit (302), der Echtheit der einen oder der mehreren Datenquellen (102-1 bis 102-N) basierend auf der ersten eindeutigen Kennung und der zweiten eindeutigen Kennung unter Verwendung eines Netzwerks selbstbestimmter Identitäten, das Identifikationsinformationen einer oder mehrerer Entitäten (104-1 bis 104-N) im verteilten Netzwerk umfasst, wenn die eine oder die mehreren Datenquellen (102-1 bis 102-N) der Anforderung der digitalen Zwillinge (106-1 bis 106-N) entsprechen;
Bereitstellen, durch die Verarbeitungseinheit (302), der empfangenen Eingabedaten an den entsprechenden digitalen Zwilling, wenn die Echtheit der einen oder der mehreren Entitäten (104-1 bis 104-N) verifiziert wird.

2. Verfahren (400) nach Anspruch 1, wobei die Eingabedaten kryptografisch durch die entsprechende eine oder die entsprechenden mehreren Datenquellen (102-1 bis 102-N) unter Verwendung der zweiten eindeutigen Kennung zum Verifizieren der Eingabedaten signiert werden.

3. Verfahren (400) nach Anspruch 1, wobei die zweite eindeutige Kennung hierarchisch von der ersten eindeutigen Kennung abgeleitet wird.

4. Verfahren (400) nach Anspruch 1, ferner umfassend ein Verwerfen der Eingabedaten, wenn die Echtheit der einen oder der mehreren Datenquellen (102-1 bis 102-N) basierend auf der ersten eindeutigen Kennung und der zweiten eindeutigen Kennung nicht verifiziert wird.

5. Verfahren (400) nach einem der vorstehenden Ansprüche, ferner umfassend:
Bestimmen, durch die Verarbeitungseinheit (302), der Qualität der Eingabedaten, die von den Datenquellen (102-1 bis 102-N), die einer oder mehreren Entitäten (104-1 bis 104-N) zugeordnet sind, empfangen werden;
Berechnen, durch die Verarbeitungseinheit (302), einer Qualitätsbewertung für den digitalen Zwilling basierend auf der bestimmten Qualität der Eingabedaten.

6. Verfahren (400) nach einem der vorstehenden Ansprüche, ferner umfassend:
Bestimmen, durch die Verarbeitungseinheit (302), einer Bewertung für die eine oder die mehreren Datenquellen (102-1 bis 102-N) basierend auf der berechneten Qualitätsbewertung;
Priorisieren, durch die Verarbeitungseinheit (302), der Datenquellen (102-1 bis 102-N) für das Empfangen der Eingabedaten, sodass die Qualitätsbewertung des digitalen Zwillings maximal ist.

7. Einrichtung (110) zur Verbesserung der Qualität und Genauigkeit der Daten einer Vielzahl digitaler Zwillinge (106-1 bis 106-N), die in einer computersimulierten kollaborativen Umgebung über ein verteiltes Netzwerk interagieren, wobei die Einrichtung umfasst:
eine oder mehrere Verarbeitungseinheiten (302) und
einen Speicher (304), der kommunikativ mit der einen oder den mehreren Verarbeitungseinheiten (302) gekoppelt ist, wobei der Speicher (304) ein Modul (306) umfasst, das in Form von maschinenlesbaren Anweisungen gespeichert ist, die durch die eine oder die mehreren Verarbeitungseinheiten (302) ausführbar sind, wobei das Modul zum Durchführen der Schritte des Verfahrens (400) nach einem der Ansprüche 1 bis 6 ausgelegt ist.

8. System (100) zur Verbesserung der Qualität und Genauigkeit der Daten einer Vielzahl digitaler Zwillinge (106-1 bis 106-N), die in einer computersimulierten kollaborativen Umgebung über ein verteiltes Netzwerk interagieren, wobei das System umfasst:
eine oder mehrere Datenquellen (102-1 bis 102-N), die einer oder mehreren Entitäten (104-1 bis 104-N) entsprechen;
eine Vielzahl digitaler Zwillinge (106-1 bis 106-N), die in einer computersimulierten kollaborativen Umgebung interagieren, wobei jeder der Vielzahl digitaler Zwillinge (106-1 bis 106-N) einem oder mehreren Assets in einer industriellen Umgebung entspricht;
ein verteiltes Netzwerk (108), das kommunikativ mit der computersimulierten kollaborativen Umgebung gekoppelt ist, wobei das verteilte Netzwerk einen oder mehrere Knoten (202A-202N) zum Speichern von Identifikationsinformationen einer oder mehrerer Entitäten (104-1 bis 104-N) umfasst; und
eine Einrichtung (110) nach Anspruch 7, die kommunikativ mit dem verteilten Netzwerk (108) und der computersimulierten kollaborativen Umgebung gekoppelt ist, wobei die Einrichtung (110) zur Verbesserung der Qualität und Genauigkeit von Daten einer Vielzahl digitaler Zwillinge (106-1 bis 106-N) nach einem der Verfahrensansprüche 1 bis 6 ausgelegt ist.

9. Computerprogrammprodukt mit darin gespeicherten computerlesbaren Anweisungen, die bei Ausführung durch eine Verarbeitungseinheit (302) die Verarbeitungseinheit (302) zum Durchführen von Schritten des Verfahrens (400) nach einem der Ansprüche 1 bis 6 veranlassen.

10. Computerlesbares Medium, auf dem Programmcodeabschnitte eines Computerprogramms gespeichert sind, wobei die Programmcodeabschnitte in ein System ladbar und/oder in diesem ausführbar sind, um das System (100) zum Ausführen der Schritte des Verfahrens (400) nach einem der Ansprüche 1 bis 6 zu veranlassen, wenn die Programmcodeabschnitte in dem System (100) ausgeführt werden.

## Revendications

1. Procédé (400) mis en oeuvre par ordinateur pour améliorer la qualité et la précision des données pour une pluralité de jumeaux numériques (106-1 à 106-N) interagissant dans un environnement collaboratif simulé par ordinateur sur un réseau distribué, le procédé comprenant les étapes suivantes :
recevoir, par une unité de traitement (302), des données d'entrée provenant d'une ou plusieurs sources de données (102-1 à 102-N) correspondant à une ou plusieurs entités (104-1 à 104-N), chacune des une ou plusieurs entités (104-1 à 104-N) étant associée à un premier identifiant unique et chacune des une ou plusieurs sources de données (102-1 à 102-N) étant associée à un second identifiant unique ;
identifier, par l'unité de traitement (302), si les une ou plusieurs sources de données (102-1 à 102-N) correspondent aux exigences des jumeaux numériques (106-1 à 106-N) qui demandent les données d'entrée sur la base du second identifiant unique et d'un ensemble d'exigences du jumeau numérique ;
vérifier, par l'unité de traitement (302), l'authenticité des une ou plusieurs sources de données (102-1 à 102-N) sur la base du premier identifiant unique et du second identifiant unique à l'aide d'un réseau d'identité auto-souverain comprenant des informations d'identification d'une ou de plusieurs entités (104-1 à 104-N) dans le réseau distribué, si les une ou plusieurs sources de données (102-1 à 102-N) correspondent à l'exigence des jumeaux numériques (106-1 à 106-N) ;
fournir, par l'unité de traitement (302), les données d'entrée reçues au jumeau numérique correspondant si l'authenticité des une ou plusieurs entités (104-1 à 104-N) est vérifiée.

2. Procédé (400) selon la revendication 1, dans lequel les données d'entrée sont signées de manière cryptographique par les une ou plusieurs sources de données correspondantes (102-1 à 102-N) à l'aide du second identifiant unique pour vérifier les données d'entrée.

3. Procédé (400) selon la revendication 1, dans lequel le second identifiant unique est dérivé du premier identifiant unique de manière hiérarchique.

4. Procédé (400) selon la revendication 1, comprenant en outre de rejeter les données d'entrée si l'authenticité des une ou plusieurs sources de données (102-1 à 102-N), basée sur le premier identifiant unique et le second identifiant unique, n'est pas vérifiée.

5. Procédé (400) selon l'une quelconque des revendications précédentes, le procédé comprenant en outre les étapes suivantes :
déterminer, par l'unité de traitement (302), une qualité des données d'entrée reçues des sources de données (102-1 à 102-N) associées à une ou plusieurs entités (104-1 à 104-N) ;
calculer, par l'unité de traitement (302), un score de qualité pour le jumeau numérique sur la base de la qualité déterminée des données d'entrée.

6. Procédé (400) selon l'une quelconque des revendications précédentes, le procédé comprenant en outre les étapes suivantes :
déterminer, par l'unité de traitement (302), une note pour les une ou plusieurs sources de données (102-1 à 102-N) sur la base de la note de qualité calculée ;
hiérarchiser, par l'unité de traitement (302), les sources de données (102-1 à 102-N) pour la réception des données d'entrée de sorte que le score de qualité du jumeau numérique soit maximal.

7. Appareil (110) permettant d'améliorer la qualité et la précision des données d'une pluralité de jumeaux numériques (106-1 à 106-N) interagissant dans un environnement collaboratif simulé par ordinateur sur un réseau distribué, l'appareil comprenant :
une ou plusieurs unités de traitement (302) ; et
une mémoire (304) couplée de manière communicative aux une ou plusieurs unités de traitement (302), la mémoire (304) comprenant un module (306) stocké sous la forme d'instructions lisibles par machine exécutables par les une ou plusieurs unités de traitement (302), le module étant configuré pour exécuter les étapes du procédé (400) selon les revendications 1 à 6.

8. Système (100) permettant d'améliorer la qualité et la précision des données d'une pluralité de jumeaux numériques (106-1 à 106-N) interagissant dans un environnement collaboratif simulé par ordinateur sur un réseau distribué, le système comprenant :
une ou plusieurs sources de données (102-1 à 102-N) correspondant à une ou plusieurs entités (104-1 à 104-N) ;
une pluralité de jumeaux numériques (106-1 à 106-N) interagissant dans un environnement collaboratif simulé par ordinateur, où chacun de la pluralité de jumeaux numériques (106-1 à 106-N) correspond à un ou plusieurs actifs dans un environnement industriel ;
un réseau distribué (108) couplé de manière communicative à l'environnement collaboratif simulé par ordinateur, où le réseau distribué comprend un ou plusieurs noeuds (202A-202N) pour stocker des informations d'identification d'une ou plusieurs entités (104-1 à 104-N) ; et
un appareil (110) selon la revendication 7, couplé de manière communicative au réseau distribué (108) et à l'environnement collaboratif simulé par ordinateur, où l'appareil (110) est configuré pour améliorer la qualité et la précision des données d'une pluralité de jumeaux numériques (106-1 à 106-N), selon l'une quelconque des revendications de procédé 1 à 6.

9. Produit programme informatique, dans lequel sont stockées des instructions lisibles par ordinateur, qui, lorsqu'elles sont exécutées par une unité de traitement (302), amènent l'unité de traitement (302) à exécuter les étapes de procédé (400) selon l'une quelconque des revendications 1 à 6.

10. Support lisible par ordinateur sur lequel sont enregistrées des sections de code de programme d'un programme informatique, les sections de code de programme pouvant être chargées et/ou exécutées dans un système pour faire en sorte que le système (100) exécute les étapes de procédé (400) selon l'une quelconque des revendications 1 à 6 lorsque les sections de code de programme sont exécutées dans le système (100).
